# EUROPEAN PATENT SPECIFICATION

(11) **EP 0 341 009 B1**
(45) Date of publication and mention of the grant of the patent: **29.09.1993**
(21) Application number: 89304373.7
(22) Date of filing: 28.04.1989
(51) Int. Cl.: B60F 3/00

(54) **Amphibious craft**
Amphibienfahrzeug
Embarcation amphibie

(30) Priority: 04.05.1988 GB 8810479
(43) Date of publication of application: 08.11.1989
(73) Proprietor: CARDOX LIMITED, Staindrop, Nr Darlington Co. Durham DL2 3NH (GB)
(72) Inventor: Royle, David Albert Cyril, Staindrop, Nr Darlington, Co Durham (GB)
(74) Representative: Orr, William McLean

(56) References cited:
- FR-A- 1 458 161
- FR-A- 2 395 160
- GB-A- 9 981
- US-A- 1 490 964
- US-A- 2 350 037
- US-A- 3 421 472
- US-A- 3 755 835
- US-A- 3 903 831

## Description

The present invention relates to amphibious craft and particularly to a boat adapted to be driven on land.

Whilst amphibious vehicles are not new, most are in the form of amphibious motor cars (or armoured vehicles). One of the main problems with this configuration is that the volume of the car is small in relation to its weight, consequently when in water the vehicle will be deeply immersed. Having little freeboard the vehicle can easily be swamped in any kind of rough water. There is also an insecurity for the occupants in being so low in the water. The design of a car is not appropriate for water travel and therefore a speed only in the region of 5 mph is possible in use.

One example of such a vehicle is disclosed in U.S. Patent specification US-A-3,903,831. In this vehicle both pairs of wheels are mounted on full width axles which take the full load factor when the wheels are in use. A very limited movement is required for the wheels between thestowed position and the lowered position. Boats have also been adapted to travel on land but the water speed of such boats is always low.

The object of the present invention is to provide a boat that will perform well in water and will also perform well as a driven vehicle on land.

To achieve the required stability and performance on water at higher speeds without detracting from the performance when driven on land it is necessary that the hull of the boat is profiled below the water line to a shape that is known in the art as a "Deep-V cross-section ". The designer of an amphibious craft wanting to use such a shape faces additional problems over designers of substantially flat bottomed craft because of the amount of movement that is required between the operating and stowage position of the wheels.

According to the present invention there is provided an amphibious craft having wheels for supporting the craft on land at least one pair of which is driveable by a motor on the craft, the driven wheels being mounted on respective rotatable stub axles which stub axles are driven via respective drive transmission mechanisms, each transmission mechanism being mounted in a respective rigid casing which forms the main strut for the respective wheel when in use, the craft comprising, for each side thereof, a respective wheel compartment disposed inside the hull and attached to the hull and into which the said driven wheel is retractable, retraction means pivotally connected to the casing being provided to move the wheels between a stowed position in the compartment and a lowered position for road use, characterised in that
i) the craft is in the shape of a boat having a Deep-V cross section below the water line,
ii) the driven wheels are driven from respective drive shafts via the respective said drive transmission mechanism,
iii) the casing is disposed at a trailing angle to the vertical when the wheel is in the lowered position,
iv) each said casing is pivotally mounted to the structure of a respective one of the wheel compartments, and is pivotable into the said wheel compartment for stowage.

The drive transmission mechanism may for example include a chain and sprockets, or a system of bevel gears and shafts. The casing preferably contains lubrication.

The invention will now be described, by way of example, with reference to the accompanying drawings in which:
Figure 1 is a side view of an amphibious craft according to the invention,
Figure 2 is a schematic section view in plan of the craft of Figure 1 showing alternate engine positions,
Figure 3 is a schematic view from inside the craft of a rear wheel retracted for water travel,
Figure 4 is a perspective view of the housing of Figure 3,
Figure 5 is a schematic view of the rear wheel of Figure 3 lowered for land use,
Figures 6a,6b, and 6d,present an exploded view of the transmission arm of Figure 3,
Figure 6c, is an alternative device for use instead of 6b,
Figure 7 is a schematic front section showing the Deep-V cross section of the hull below the water line and one embodiment of the front wheel retraction mechanism, and
Figures 8a, 8b, 8c, and 8d, are schematic partial views of a second retraction mechanism for the front wheels.

The drawings illustrate an amphibious craft in the form of a performance boat having a deep-V cross-section hull. The boat is converted so as to provide a means of driving the craft on land on wheels. The operation of the boat in water is substantially unimpaired other than due to the extra weight carried. The profile is unaltered and the drag is not substantially increased.

The boat in water is driven either by an inboard motor normally in an aft position (such as shown at Y in Figure 2) or by an outboard motor (not shown). Where an inboard motor is used it could also power the wheels for use of the craft on land. If one or more outboard motors is used on the boat, a secondary motor such as that shown at X would have to be provided to drive the wheels. In either case the boat wheels are driven in a manner similar to those on an automobile through a gear box G, a shaft S, a differential 14 and a shaft 15. Inboard brakes 10 would also be provided.

The wheels on the boat comprise a pair of steerable forward wheels designed to carry one third of the weight of the boat and set one either side of a keel 12 in the bow of the boat; and two drivable rear wheels 13 designed to carry two thirds of the weight of the boat. The rear wheels 13 are positioned on opposed sides of the boat inside the line of the hull. The use of a pair of forward wheels leaves the keel unimpaired in strength and so does not interfere with the strength of the boat structure.

In the present embodiment the differential 14 is situated between the rear wheels 13 and operates to transfer power from one of the motors X,Y, via respective driven shafts S1,or S2 to driving shafts 15. The driving shafts 15 operate each to drive one of the wheels indirectly via a respective drive transmission mechanism as will be described hereinafter with reference to Figure 6.

Each rear wheel is housed in a respective box 16 providing a compartment attached to the inside of the hull. The fitting of the box to the hull is entirely watertight so that water entering the compartment will not enter the boat. The compartment is closed by sliding doors (not shown) which need not be watertight. The top of the compartment is situated well above the water line and therefore any water seeping past the doors will remain in the compartment at a level equal to or below the water level outside the hull.

The box is strengthened by a metal frame reinforced where necessary. The frame includes ribs formed by metal bars and tubes including a T-bar 19 and an angle iron 21, both running longitudinally up the sloping top of the box 16. The angle iron 21 also includes a reinforcement flange 22. A bracket 30 is bolted to the reinforcement flange 22 for supporting the casing 27 described hereinafter. The flange 22 is apertured to allow access for the shaft 15 into the compartment.

When the wheels are lowered for land use the weight of the boat causes local stress on the points of contact between the wheel supports and the box 16. This stress is distributed throughout the width of the boat by the ribs 19,21 and by two fabricated cross-beams 24,25. The cross beams are held across the top of the box 16 by metal plates 26 fixed to the hull 18. The beams 24,25 are also fixed to fittings (not shown) at the bottom of the boat.

Power is transferred from the driving shaft 15 to a driven rear wheel stub axle via a drive transmission mechanism housed in a rigid casing or transmission arm 27. The casing 27 also forms a pivot arm and main support for the wheel 13. The drive transmission mechanism can be of any appropriate type suitable to transfer rotation from the shaft 15 to drive the wheel stub axle. Two examples are shown. Figure 6b shows sprockets 28 which are fitted to the shaft 15 and sprockets 29 which are fitted to the wheel stub axle. The sprockets 29 are driven from the sprockets 28 by means of single or multiple chains 31. Figure 6c shows an alternative mechanism in the form of bevel gearing between the other end of the arm 33 and the wheel stub axle.

Each casing forms a watertight housing for the chosen drive transmission and comprises an elongate box 27a with cylindrical ends, having a lid 27b which is removably fitted with bolts via holes 35. The box 27a is apertured at 36 for the shaft 15 and at 37 for the wheels stub axle. The lid 27b has a single aperture 38 opposite the aperture 36 to receive the shaft 15. The casing 27 is sealed watertight and incorporates a quantity of lubricating oil which also acts to protect the drive transmission from corrosion.

The casing, which acts as a strut and pivot arm for the wheel 13, is pivotally mounted at each end respectively to the sloping roof of the box 16 and to the wheel 13. The mounting to the box includes a bracket 30 firmly fixed to the inside of the roof of the box and bolted to the T-bar and the bracket (not shown) bolted to the angle iron 22. The pivotal movement is controlled by a hydraulic ram 39,which can be remotely actuated, and is connected between a pivotal mounting 40 bolted to the T-bar 19 and a suitable pivotal mounting on the casing 27. Extension of the ram lowers the wheel 13, the weight of the boat being supported by the ram and the casing 27. Retraction of the ram 39 raises the wheel 13 into the compartment 16 until the casing is substantially horizontal. The casing is sealed for normal use but can be opened for repair and maintenance.

The front wheels 11 are supported on stub axles (41a) mounted on a forked wheel support or "forks" 41, the upper end of which is in the form of a square-sectioned collar 42. The collar 42 is slidably mounted on a square-sectioned central pillar 43, the upper and lower ends of which pillar are pivotally mounted to the boat structure at 44 and 45. The pillar 43 is pivoted to steer the craft on land by movement of a steering arm 46 which action turns the collar 42 to turn the wheels 11. When the wheels are in the lowered position they can be held in position by security locks. The wheels are raised and lowered by a hydraulic ram (not shown) which operates between respective brackets on the pillar and collar. The pillar, the collar and the ram form elements of a retraction mechanism for the wheels. In the raised position the wheels are stowed in a watertight compartment 50 in the bow of the boat. As with the rear wheels the fitting of the doors need not be watertight. When the compartment is closed the profile of the boat is maintained by two doors 47 hinged at 48 which are closed against the bottom 49 of the boat. The actual portion of the bottom of the boat that is cut away to form the doors 47 is important as sufficient room must be left for the wheel "forks" 41 to turn the wheels in the lowered position without collision or interference with or from the boat structure.

The arrangement of the steering arm above the water line of the boat makes for a simpler mechanism. Moreover with this sliding collar arrangement the wheels can be steered successfully in any position of the collar on the pillar.

In some boats there may not be sufficient room for a large front wheel compartment with the wheel "forks" 41 stored substantially vertically. Figure 8 shows an alternative arrangement to cater for storage in a smaller deck to keel depth. Each drawing shows only part of the arrangement and it may be necessary to refer to Figure 7 to understand the whole.

Figure 8a is a front view of the lower part of the mechanism showing the wheel forks 41 and one wheel 11. The wheel "forks" 41 are pivotally mounted at 51 to the collar 42 and are connected together by a bar 52. Respective bars 53 are pivotally mounted to opposed sides of the bar 52 at one end and at the other end 50 are pivotally mounted to opposed sides of the central pillar 43. A shoulder 54 on the collar 42 provides a lower mounting point for the ram now shown at 55 and the pivotal mounting of the central pillar 43 to the keel 12 is also shown. Figure 8b is a side view of Figure 8a showing the central area of the mechanism with the wheels in the lowered position. It will be noted that as the ram 55 draws the collar 42 up until it abuts the pivotal mounting 50 the pivoted bars operate as a lever mechanism to lift the wheels until the "forks" 41 lie along the line of the boat substantially horizontally.

Figure 8c illustrates the connection of the central pillar 43 at the upper end of the pillar. The same pivotal connection and height adjustment pieces and fillers may be used at the lower pivotal mounting 45. The connection comprises a sub-assembly of a mounting block 56, a thrust bearing 57 and a nut 61. The upper race of the thrust bearing 57 has a pivot mounting 58 for attachment to the deck. The lower race of the bearing 57 is located by a threaded bolt portion 59. The bolt 59 is threaded through the centre of the mounting block 56 and is screw threaded into the nut 61. This sub-assembly is then fitted into the top end of the pillar 43 to which it is bolted via holes 63 in the block and 64 in the pillar. The length of the pillar 43 is selected in accordance with the distance between the deck (or strong mounting) and the keel on any particular boat and any fine adjustment to the fitting is achieved using shims (not shown).

In each case the hydraulic ram is connected to a hydraulic pump powered by the motor X or Y or alternatively driven by an electric motor on the craft. It is envisaged that the craft will not be expected to travel more than 25 miles per hour on land. In this case floatation tyres can be used absolving the need for suspension. If a greater land speed is required then higher pressure road tyres will be needed and probably some springing or other suspension. The gearing in the chain casing 27 and the gear box G can be of any desired ratio.

## Claims

1. An amphibious craft having wheels (11,13) for supporting the craft on land at least one pair of which is driveable by a motor on the craft, the craft comprising means for retracting the said driven wheels into compartments for stowage; the driven wheels being mounted on respective rotatable stub axles which stub axles are driven via respective drive transmission mechanisms, each transmission mechanism being mounted in a respective rigid casing (27) which forms the main strut for the respective wheel when in use, the craft comprising, for each side thereof, a respective wheel compartment into which the said driven wheel is retractable, retraction means pivotally connected to the casing being provided to move the casing between a stowed position in the compartment and a lowered position for road use, characterised in that
i) the craft is in the shape of a boat having a Deep-V cross section below the water line with the wheel compartments disposed inside the hull and attached to the hull,
ii) the driven wheels are driven from respective drive shafts (15) via the respective said drive transmission mechanism (28,31;33,34)
iii) each said casing (27) is disposed at a trailing angle to the vertical when the wheel (13) is in the lowered position,
iv) each said casing (27) is pivotally mounted to the structure of a respective one of the wheel compartments (16), and is pivotable into the said wheel compartment (16) for stowage.

2. A craft according to claim 1 characterised in that the said means (39) for moving the casing (27) between the stowed position and a lowered position is pivotally mounted to the structure of the respective wheel compartment (16) and to the respective casing (27).

3. A craft according to claim 2 characterised in that the pivotal mounting (30) between each said means (39) and the respective wheel compartment (16) is made to the roof of the said compartment (16).

4. A craft according to claim 2 or 3 characterised in that the roof of each wheel compartment (16) is at least partially inclined to the horizontal.

5. A craft according to claim 4 characterised in that the roof of each wheel compartment (16) is strengthened by a respective reinforcing frame (19,21).

6. A craft according to claim 1 or 2 including transverse reinforcement (25) extending between the wheel compartments (16).

7. A craft according to any of the preceding claims wherein the wheels are rear wheels, the craft including a pillar (43) fixed for pivotal movement about one axis only , a forward wheel (11) mounted on the pillar (43), a steering arm (46) mounted on the pillar (43) to turn the pillar (43) whereby turning of the steering arm (46) alters the angle of the forward wheel (11), the craft including a stowage compartment (40) into which the front wheel (11) is retractable, and a retraction mechanism for moving the front wheel between a lowered position in which it can be used on land to a stowed position housed in the compartment (40).

8. A craft according to claim 7 characterised in that the stowage compartment (40) for the forward wheel (11) is provided with closeable door means (47) profiled to the desired shape of the hull.

9. A craft according to claim 7 or 8 and including two forward wheels (11), the wheels (11) being arranged one on each side of the longitudinal centre line (12) of the boat.

10. A craft according to any of claims 7 to 9 characterised in that the retraction mechanism for the forward wheel includes a collar (42) which is arranged to slide on the pillar (43) whilst being rotationally fixed relative thereto, the wheel (11) being attached to the collar (42).

## Patentansprüche

1. Amphibienfahrzeug mit Rädern (11, 13) zum Tragen des Fahrzeuges auf dem Land, von denen Wenigstens ein Paar von einem Motor auf dem Fahrzeug antreibbar ist, wobei das Fahrzeug eine Vorrichtung zum Einziehen der genannten angetriebenen Räder in Staufächer aufweist, wobei die angetriebenen Räder auf entsprechenden drehbaren Achsschenkeln montiert sind, welche über entsprechende Kraftübertragungsmechanismen angetrieben werden, wobei jeder Kraftübertragungsmechanismus in einem entsprechenden steifen Gehäuse (27) montiert ist, das bei Gebrauch die Hauptstütze für das entsprechende Rad bildet, wobei das Fahrzeug für jede seiner Seiten ein entsprechendes Radfach aufweist, in das das genannte angetriebene Rad einziehbar ist, wobei an dem Gehäuse eine angelenkte Einziehvorrichtung vorgesehen ist, um das Gehäuse zwischen einer Stauposition in dem Fach und einer Absenkposition zur Verwendung auf der Straße zu bewegen, dadurch gekennzeichnet, daß
i) das Fahrzeug die Form eines Bootes mit einem tiefen V-Querschnitt unterhalb der Wasserlinie aufweist, wobei die Radfächer innerhalb des Rumpfes angeordnet und an diesem befestigt sind;
ii) die angetriebenen Räder von entsprechenden Antriebswellen (15) über den entsprechenden genannten Kraftübertragungsmechanismus (28, 31; 33, 34) angetrieben werden;
iii) jedes genannte Gehäuse (27)in einem Nachlaufwinkel zur Vertikalen angeordnet ist, wenn sich das Rad (13) in der Absenkposition befindet;
iv) jedes genannte Gehäuse (27) drehbar in der Struktur eines entsprechenden Radfaches (16) montiert ist und zum Verstauen in das genannte Radfach (16) geschwenkt werden kann.

2. Fahrzeug nach Anspruch 1, dadurch gekennzeichnet, daß die genannte Vorrichtung (39) zum Hin- und Herbewegen des Gehäuses (27) zwischen der genannten Stauposition und einer Absenkposition schwenkbar an der Struktur des entsprechenden Radfaches (16) und an dem entsprechenden Gehäuse (27) montiert ist.

3. Fahrzeug nach Anspruch 2, dadurch gekennzeichnet, daß sich der Angelpunkt (30) zwischen jeder der genannten Vorrichtungen (39) und dem entsprechenden Radfach (16) am Dach des genannten Faches (16) befindet.

4. Fahrzeug nach Anspruch 2 oder 3, dadurch gekennzeichnet, daß das Dach jedes Radfaches (16) wenigstens teilweise zur Horizontalen geneigt ist.

5. Fahrzeug nach Anspruch 4, dadurch gekennzeichnet, daß das Dach jedes Radfaches (16) durch einen entsprechenden Verstärkungsrahmen (19, 21) verstärkt ist.

6. Fahrzeug nach Anspruch 1 oder 2 mit einer zwischen den Radfächern (16) verlaufenden Querverstärkung (25).

7. Fahrzeug nach einem der Vorhergehenden Ansprüche, wobei die Räder Hinterräder sind und wobei das Fahrzeug eine für eine Schwenkbewegung um lediglich eine Achse befestigte Säule (43) aufweist, wobei ein Vorderrad (11) an der Säule (43) und ein Lenkarm (46) zum Drehen der Säule (43) an dieser montiert ist, wobei durch Drehen des Lenkarms (46) der Winkel des Vorderrades (11) geändert wird, wobei das Fahrzeug ein Staufach (40) aufweist, in das das Vorderrad (11) einziehbar ist, sowie einen Einziehmechanismus zum Hin- und Herbewegen des Vorderrades zwischen einer Absenkposition, in der es auf dem Land verwendet werden kann, und einer Stauposition in dem Fach (40).

8. Fahrzeug nach Anspruch 7, dadurch gekennzeichnet, daß das Staufach (40) für das Vorderrad (11) mit einer schließbaren Türvorrichtung (47) versehen ist, die nach der gewünschten Form des Rumpfes ausgebildet ist.

9. Fahrzeug nach Anspruch 7 oder 8 mit zwei Vorderrädern (11), die jeweils auf einer Seite der Längsmittellinie (12) des Bootes angeordnet sind.

10. Fahrzeug nach einem der Ansprüche 7 bis 9, dadurch gekennzeichnet, daß der Einziehmechanismus für das Vorderrad einen Bund (42) aufweist, der an der Säule (43) entlang verschoben werden kann und gleichzeitig drehbar um diese befestigt ist, wobei das Rad (11) an dem Bund (42) angebracht ist.

## Revendications

1. Embarcation amphibie comportant des roues (11, 13) pour supporter l'embarcation à terre, dont au moins une paire peut être commandée par un moteur embarqué, l'embarcation comprenant des moyens pour rentrer lesdites roues motrices dans des compartiments d'arrimage; les roues motrices étant respectivement montées sur des portions d'arbres, lesdites portions d'arbres étant respectivement commandées en rotation par des systèmes de transmission moteurs, chaque système de transmission étant monté dans un boîtier rigide respectif (27) qui constitue le support principal de chaque roue lors de son utilisation, l'embarcation comprenant, sur chacun de ses côtés, un compartiment pour chaque roue dans lequel ladite roue motrice peut être rentrée, les moyens de rétraction montés pivotant sur le boîtier étant agencés Je façon à déplacer le boitier entre une position d'arrimage dans le compartiment et une position abaissée pour l'utilisation sur route,
caractérisée en ce que:
i) l'embarcation a la forme d'un bateau ayant, en dessous de la ligne de flottaison, une section transversale en forme d'un "V" profond, les compartiments pour les roues étant disposés dans la coque en lui étant fixés,
ii) les roues motrices sont respectivement commandées par des arbres de transmission (15) via, pour chaque roue, un système de transmission moteur (28,31 ; 33,34),
iii) chacun desdits boîtiers (27) est disposé incliné vers l'arrière par rapport à la verticale lorsque la roue (13) est dans la position abaissée,
iv) chacun desdits boîtiers (27) est monté pivotant sur la structure de son compartiment de roue respectif (16), et peut pivoter à l'intérieur dudit compartiment de roue (16) pour l'arrimage.

2. Embarcation selon la revendication 1, caractérisée en ce que lesdits moyens (39) pour déplacer le boîtier (27) entre la position d'arrimage et la position abaissée sont montés pivotants sur la structure de leur compartiment de roue (16) et sur leur boîtier (27) respectifs.

3. Embarcation selon la revendication 2, caractérisée en ce que le montage à pivot (30) entre chacun desdits moyens (39) et son compartiment de roue respectif (16) est situé sur le plafond dudit compartiment (16).

4. Embarcation selon l'une des revendications 2 et 3, caractérisée en ce que le plafond de chaque compartiment de roue (16) est au moins partiellement incliné par rapport à l'horizontale.

5. Embarcation selon la revendication 4, caractérisée en ce que le plafond de chaque compartiment de roue (16) est renforcé par une armature de renfort (19, 21).

6. Embarcation selon l'une des revendications 1 et 2, comportant une armature transversale (25) s'étendant entre les compartiments de roue (16).

7. Embarcation selon l'une quelconque des revendications précédentes, dans laquelle les roues sont des roues arrière, l'embarcation comportant une jambe (43) montée pour un mouvement de pivotement autour d'un sel axe, une roue avant (11) montée sur la jambe (43), un bras de gouvernail (46) monté sur la jambe (43) pour faire tourner cette jambe (43) de façon que la rotation du bras de gouvernail (46) modifie l'orientation de la roue avant (11), l'embarcation comportant un compartiment d'arrimage (40) dans lequel peut être rentrée la roue avant (11), et un système de rétraction pour déplacer la roue avant entre une position abaissée dans laquelle elle peut être utilisée sur terre et une position d'arrimage logée dans le compartiment (40).

8. Embarcation selon la revendication 7, caractérisée en ce que le compartiment d'arrimage (40) pour la roue avant (11) est pourvu de moyens de porte apte à être fermée (47) profilés dans la forme de la coque.

9. Embarcation selon l'une des revendications 7 et 8 et comportant deux roues avant (11), les roues (11) étant disposées de part et d'autre de l'axe central longitudinal (12) du bateau.

10. Embarcation selon l'une des revendications 7 à 9, caractérisée en ce que le système de rétraction pour la roue avant comporte une bague (42) qui est agencée pour coulisser le long de la jambe (43) tout en étant fixe en rotation par rapport à cette jambe, la roue (11) étant solidaire de la bague (42).
